# EUROPEAN PATENT APPLICATION

(11) **EP 1 289 296 A2**
(43) Date of publication of application: **05.03.2003**
(21) Application number: 02250322.1
(22) Date of filing: 17.01.2002
(51) Int. Cl.: H04N 7/16, H04N 5/782

(54) **Reservation control unit**

(30) Priority: 10.08.2001 JP 2001243175
(71) Applicant: FUJITSU LIMITED, Kawasaki-shi, Kanagawa 211-8588 (JP)
(72) Inventor: Ikeda, Yuuichirou, c/o Fujitsu Limited, Kawasaki-shi, Kanagawa 211-8588 (JP); Nakamura, Yasufumi, c/o Fujitsu Limited, Kawasaki-shi, Kanagawa 211-8588 (JP)
(74) Representative: Hitching, Peter Matthew

(57) **Abstract**

A reservation control unit reserving a receipt or record of a program includes a search request module (11) that requests a program information retaining unit (2) for retaining program information containing a programbroadcast date/time andprogram contents, to search for the program information, a reservation request module (11) that requests a program reservation unit (3) for making a reservation of viewing or recording the program, to reserve viewing or recording the program, and an information obtaining module (11, 12, 13, 14, 15, 16 or 17) for obtaining information related to the program from contents of the program received by a program receiving unit. The search request module (11) makes the program information retaining unit (2) search for the program information of the program related to the received program on the basis of the information obtained by the information obtaining module (11, 12, 13, 14, 15, 16 or 17), and the reservation request module (11) makes a request for reserving a receipt of the program or reserving a record of the program on the basis of the searched program information.

## Description

The present invention relates to a broadcast receiving system for and a broadcast receiving method of receiving a broadcast containing pictures, voices, sounds and data.

With a launch into the digital broadcasting in recent years , there has been provided a receiving system that stores a list of program information (which is so-called EPG (Electronic ProgramGuide) . Aviewer (audience) specifies a desired program in the list of program information by utilizing this type of receiving system. The receiving system displays pieces of information on the specified program or reserves the program.

Further, what is schemed in the broadcast receiving system is a function of detecting a program related to a specified piece of information by making use of the information contained in the EPG stored and retained therein, and displaying pieces of information on the above related-program or reserving this program.

The prior art was, however, incapable of searching for (detecting) a program related to an on-broadcasting program by detecting the information about contents of the on-broadcasting program. The information related to the on-broadcasting program could be detected only by such a manual method that the viewer manually displays the program information about the on-broadcasting program or searches through a referential medium.

Moreover, the viewer, even when detecting the related-program from the EPG, must manually input a specified piece of information. According to a technology disclosed in, e.g., Japanese Patent Application Laying-Open Publication No.11-168667, there is added link information linked to the program related to program information data to be transmitted. With this contrivance, all pieces of program information related to the on-viewing program are thereby displayed. The viewer is able to view and reserve recording in accordance with the program information displayed.

The added link information is linked to the program as a whole, and it is impossible to automatically select and discern between pieces of link information related to some contents of a specified program. Hence, even when the viewer desires to reserve a program related to one of the contents of the on-viewing program, it follows that a list of program including those unrelated to the contents of the on-viewing program is displayed.

In this type of broadcast receiving system, the viewer needs to select the information related to the contents of the program by the manual input. For example, if the viewer desires to reserve other programs in which a performer appearing now in, e.g., an on-broadcasting dramatic program during the view of this program, there is displayed a list of programs related to pieces of information on other performers and a scenario writer of the drama. Consequently, the information on the program desired by the viewer might be covered with many pieces of information of other programs.

Such being the case, for selectively displaying the necessary pieces of program information, it is indispensable for the viewer to grasp the names of the performers in order to select the target program from the list of programs.

Further, there are methods of referring radio and TV columns on the newspapers and magazines, and also the EGP described above. In this case, the viewer detects the names of the performers from the EGP and so on, and manually inputs these names to a program information list search function, thereby displaying the related programs.

Thus , the prior art is incapable of displaying the program information related to the contents of the on-viewing program and reserving the related-program without any additional action of the viewer. Namely, the viewer needs to obtain the information (such as the displayed names of the performers in the example given above) about the program contents , and to detect the program based on these pieces of information.

It is a primary object of the present invention, which was devised to obviate the above problems inherent in the prior art, to provide functions capable of easily acquiring pieces of information on a program related to contents of an on-viewing program, and viewing and reserving this related-program even if a viewer has no information about the program contents.

According to one aspect of the present invention, a reservation control unit (1) for reserving a receipt or record of a program comprises a search request module (11) requesting a program information retaining unit (2) retaining program information containing a program broadcast date/time and a content information to search for the program information, a reservation request module (11) requesting a program reservation unit (3) making a reservation of viewing or recording the program to reserve viewing or recording the program, and an information obtaining module (11, 12, 13, 14, 15, 16 or 17) obtaining information related to the program from contents of the program received by a program receiving unit. The search request module (11) makes the program information retaining unit (2) search for the program information of the program related to the received program on the basis of the information obtained by the information obtaining module (11, 12, 13, 14, 15, 16 or 17), and the reservation request module (11) makes a request for reserving a receipt of the program or reserving a record of the program on the basis of the searched program information.
Preferably, the information obtaining module (11, 12, 13, 14, 15, 16 or 17) may include a voice recognizing module (12) converting voices contained in the received program into character information, and may obtain the character information from the voices.

Preferably, the information obtaining module (11, 12, 13, 14, 15, 16 or 17) may obtain the character information from a caption contained in the received program. For example, the caption may be a superimposed caption, a closed caption, credits, subtitles or other superimposed characters.

Preferably, the information obtaining module (11, 12, 13, 14, 15, 16 or 17) may obtain the character information in a data broadcast multiplexed with a program broadcast.

Preferably, the information obtaining module (11, 16 or 17) may access a scenario data retaining unit (8) retaining scenario data of the program, and may obtain information from the scenario data.

Preferably, the information obtaining module (11, 16 or 17) may obtain the information from the scenario data transmitted in multiplexing with the program broadcast.

Preferably, the scenario data may contain an elapse time since a start of the program and character information describing the program contents at this elapse time.

Preferably, the scenario data may contain an elapse time since a scenario data transmission date/time and character information describing the program contents at this elapse time .

According to another aspect of the present invention, a program reserving method comprises obtaining (S2) information related to a program from contents of a program received by a program receiving unit, searching for a broadcast date/time of the program related to the received program on the basis of the program-related information, and making (S6) a request for reserving a receipt of the program or a record of the program on the basis of the broadcast date/time.

According to a further aspect of the present invention, there is provided a program executed by a computer to actualize any one of the functions described above.

According to a still further aspect of the present invention, there is provided a readable-by-computer recording medium recorded with this program.

As explained above, according to the present invention, the viewer is, even when having no information about the program contents, able to easily acquire the information on the program related to the on-viewing program, and to view and reserve the related-program.

Preferred features of the present invention will now be described, purely by way of example, with reference to the accompanying drawings, in which:-
FIG. 1 is a diagram showing the principle of a broadcast receiving system in a first embodiment of the present invention;
FIG. 2 is a view showing an example 1 of a screen image displayed on a display unit 6;
FIG. 3 is a view showing an example 2 of the screen image displayed on the display unit 6;
FIG. 4 is a diagram showing a system architecture of the broadcast receiving system;
FIG. 5 is a diagram showing a data structure of a program information database 23;
FIG. 6 is a diagram showing an example of a data structure in a program reservation table;
FIG. 7 is a flowchart showing processes by a program detection control module 11;
FIG. 8 is a flowchart showing a program information search process;
FIG. 9 is a flowchart showing a program reservation process;
FIG. 10 is a diagram showing a system architecture (1) of the broadcast receiving system in a modified example of the first embodiment;
FIG. 11 is a diagram showing a system architecture (2) of the broadcast receiving system in a modified example of the first embodiment;
FIG. 12 is a diagram showing a system architecture of a broadcast receiving system in a second embodiment;
FIG. 13 is a diagram showing an example of program scenario data;
FIG. 14 is a flowchart showing processes by the program detection control module 11;
FIG. 15 is a flowchart showing a scenario data obtaining process;
FIG. 16 is a flowchart showing a program information search process;
FIG. 17 is a flowchart showing a scenario data output process;
FIG. 18 is a diagram showing a system architecture of a broadcast receiving system in a modified example of the second embodiment; and
FIG. 19 is a diagram showing a data structure of program scenario data in the modified example of the second embodiment.

### «First Embodiment»

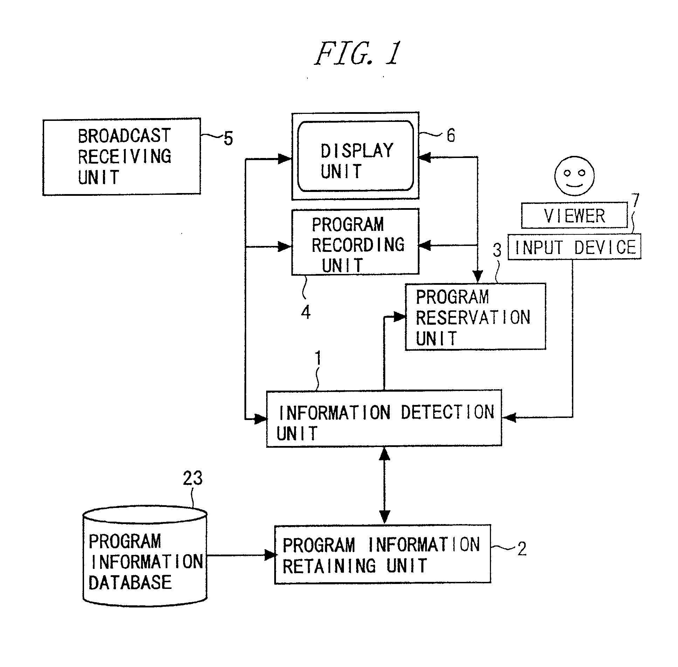

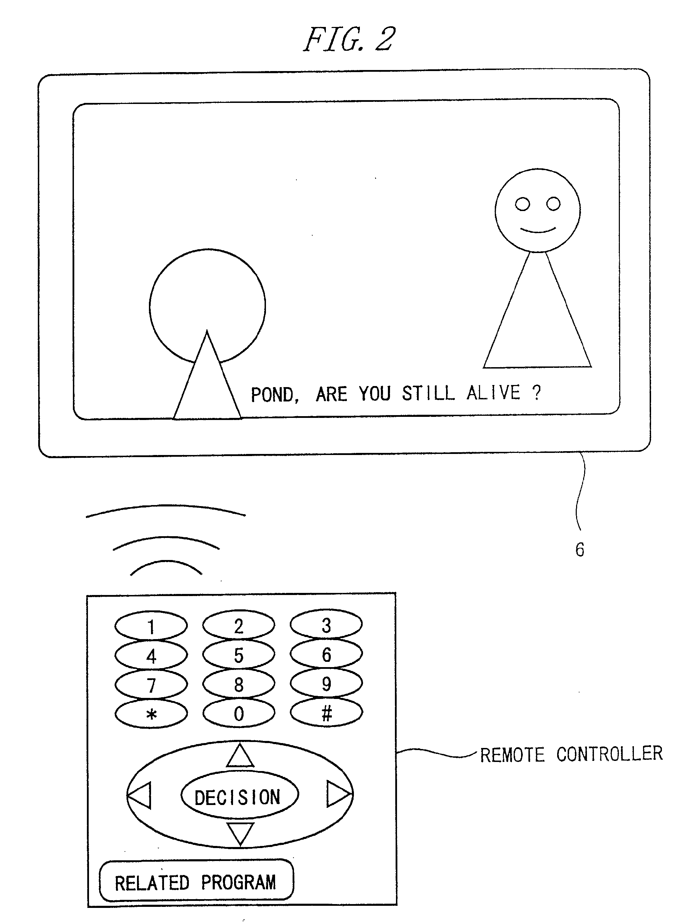

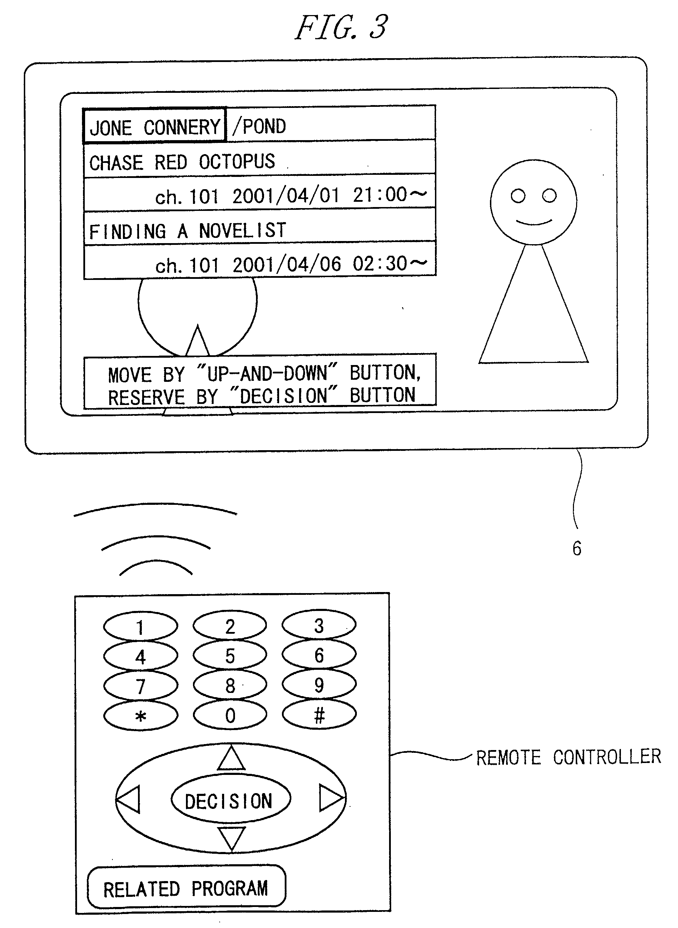

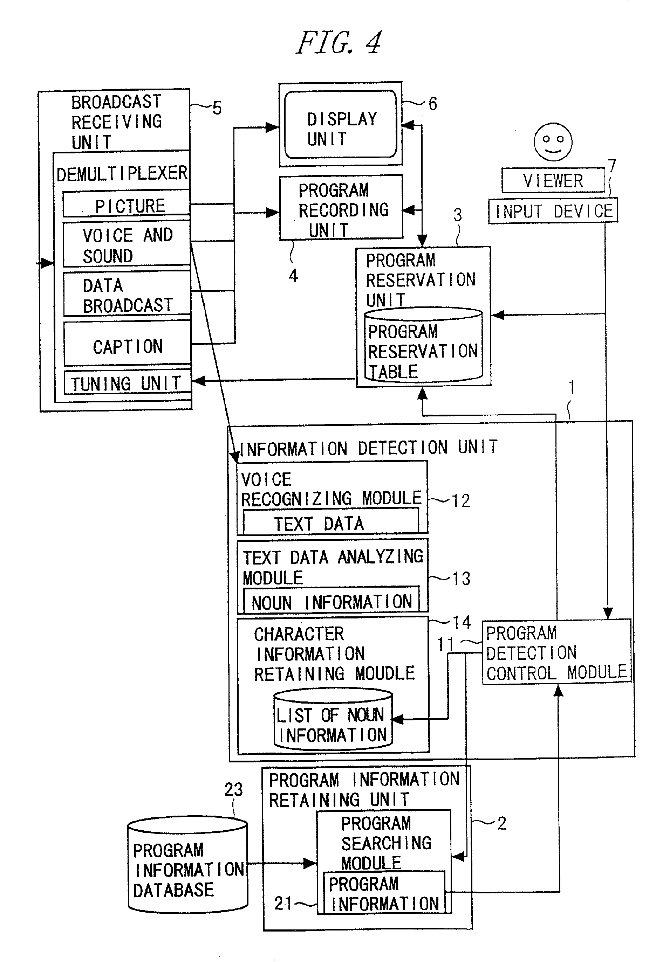

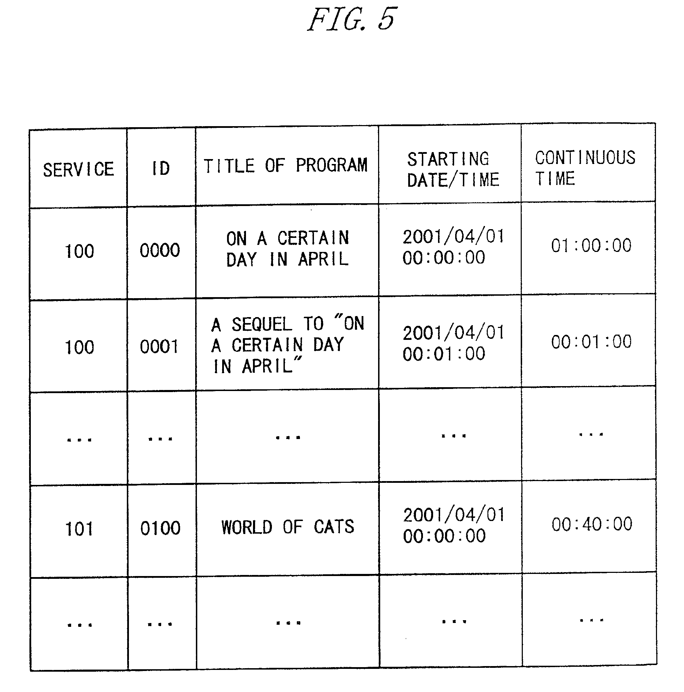

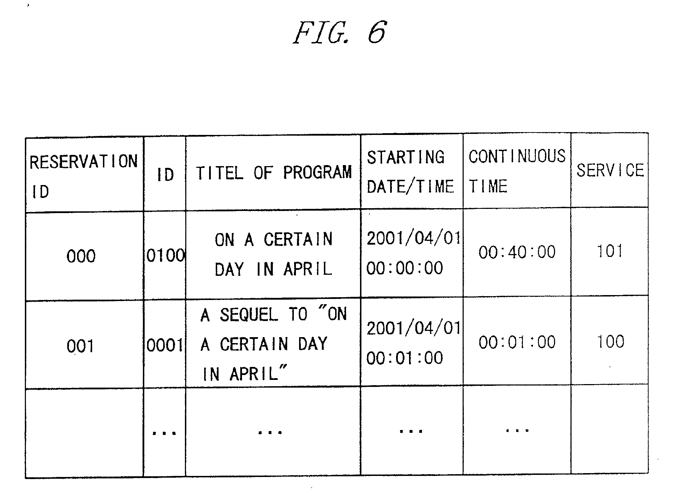

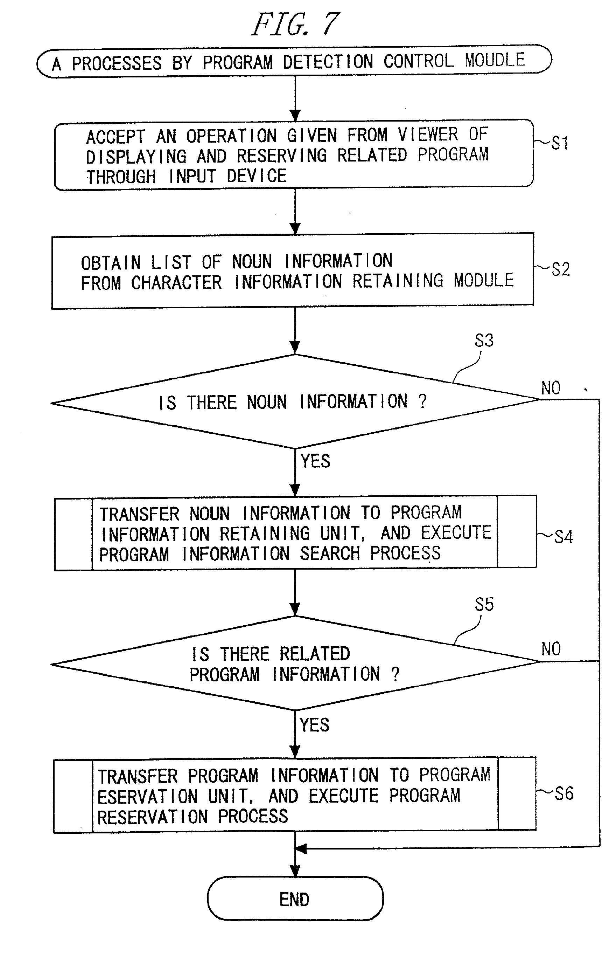

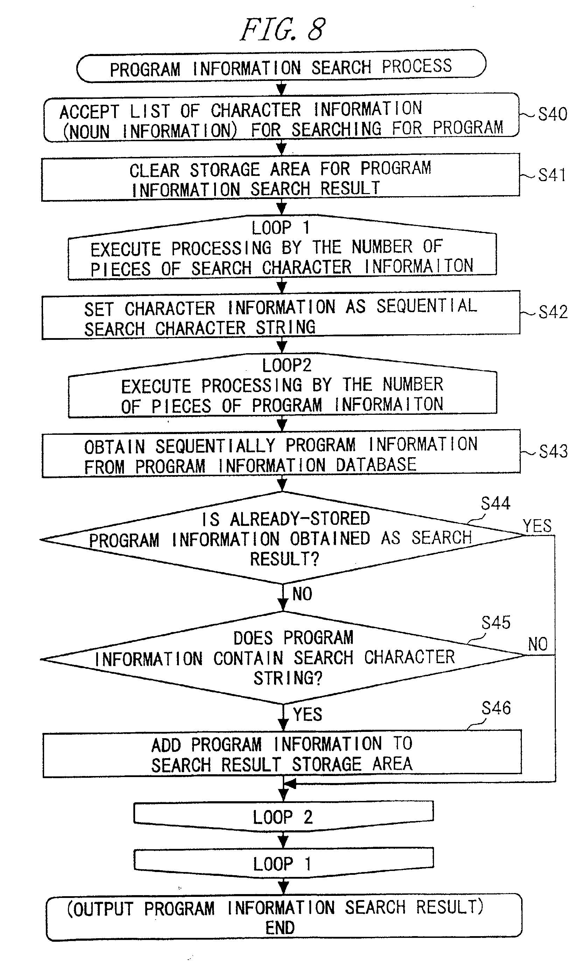

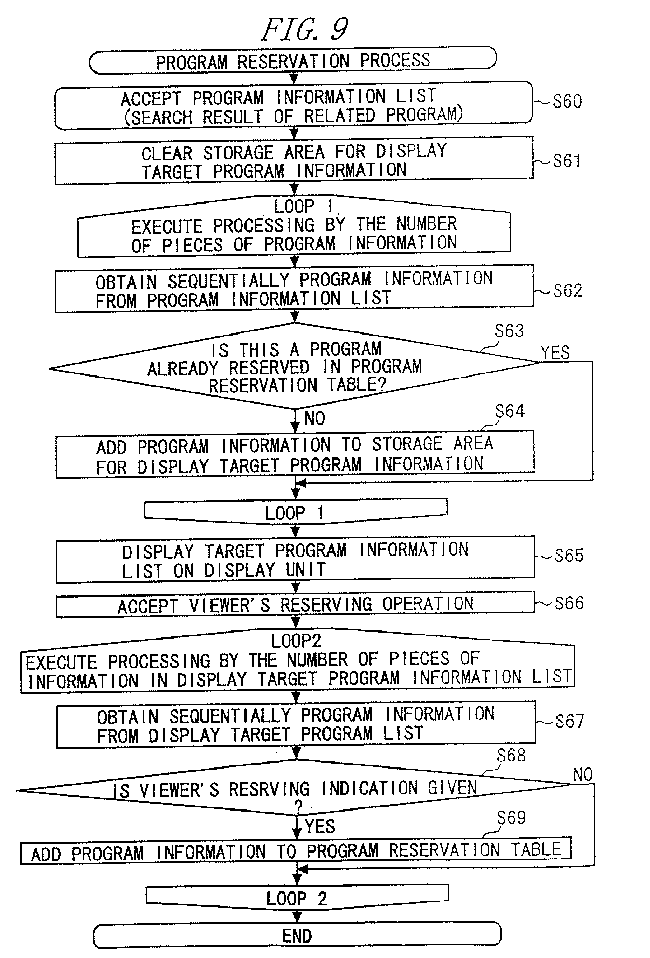

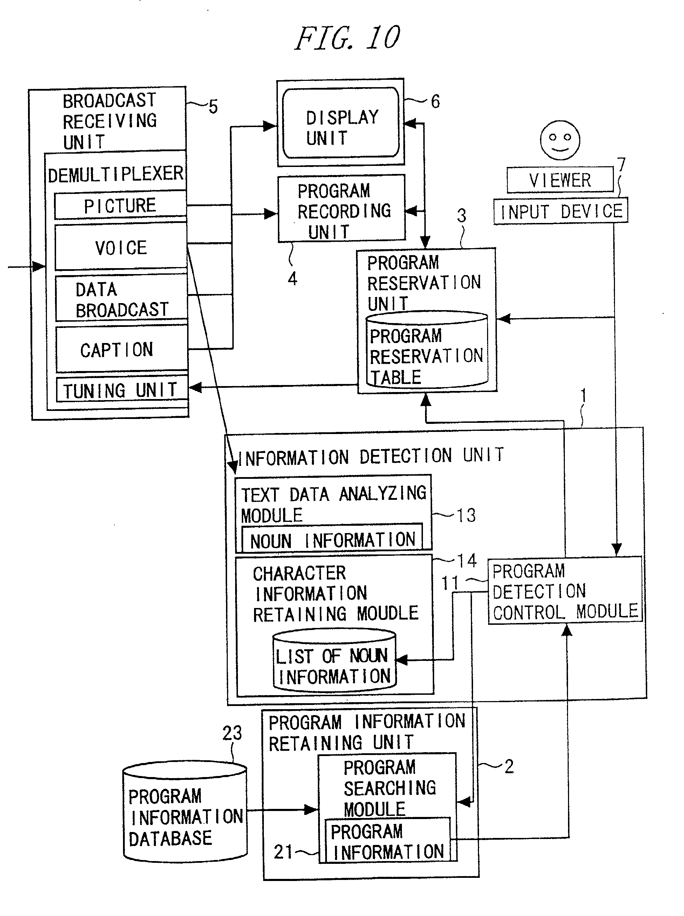

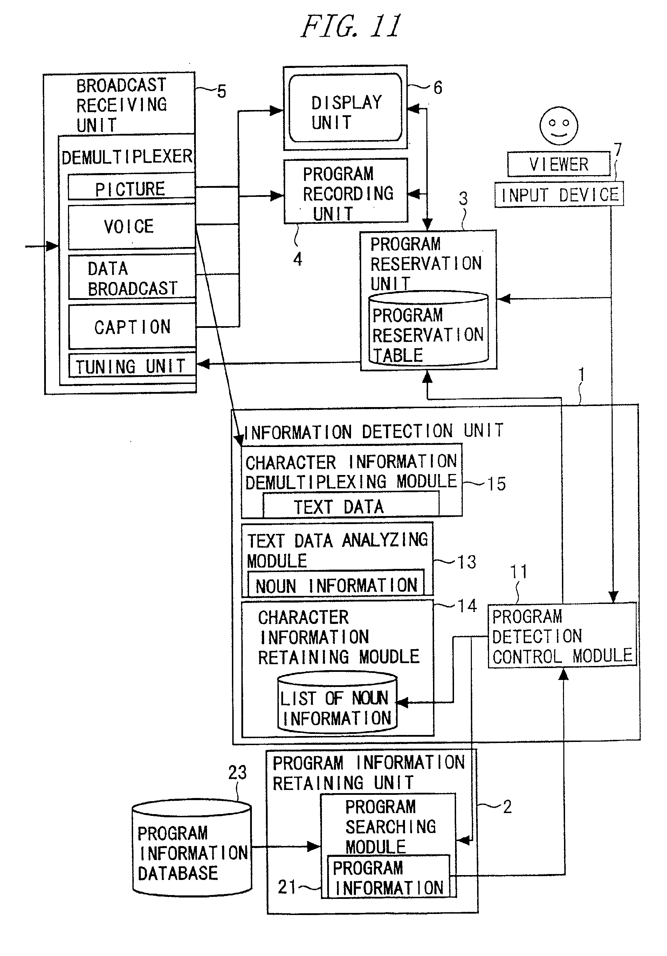

A broadcast receiving system in a first embodiment of the present invention will hereinafter be described referring to FIGS. 1 through 11. FIG. 1 is a diagram showing a principle of the broadcast receiving system. FIGS. 2 and 3 are views each showing an example of a screen image displayed on a display unit 6 shown in FIG. 1. FIG. 4 is a diagram showing a system architecture of the broadcast receiving system. FIG. 5 is a diagram showing an example of a structure of a program information database 23 shown in FIG. 4. FIG. 6 is a diagram showing an example of a data structure in a program reservation table retained by a program reservation unit 3 shown in FIG. 4. FIG. 7 is a flowchart showing processes by a program detection control unit 11 shown in FIG. 4. FIG. 8 is a flowchart showing a program information search process by a program search unit 21 shown in FIG. 4. FIG. 9 is a flowchart showing a program reservation process by the program reservation unit 3. FIGS. 10 and 11 are diagrams each showing a system architecture of the broadcast receiving system by way of a modified example of the first embodiment.

### <Principle of Broadcast Receiving System in First Embodiment>

FIG. 1 is the diagram showing the principle of the broadcast receiving system. This broadcast receiving system includes a broadcast receiving unit 5, the display unit 6 for displaying the broadcast received, a program recording unit 4 for recording the broadcast received, the program reservation unit 3 for accepting a reservation with respect to the broadcast receiving unit 5 or the program recording unit 4, an information detection unit 1 for detecting pieces of information on the program received, a program information retaining unit 2 for retaining a description of contents etc of respective programs , the program information database 23, and an input device 7 for a viewer (audience) to operate this receiving system.

The broadcast receiving unit 5 is, for example, a tuner or a set-top box that receives the broadcast program. The broadcast program is transferred to the display unit 6, the program recording unit 4 and the information detection unit 1.

The viewer views program contents containing pictures, sounds, data broadcast, and a caption (including a title, a brief explanation, a dialogue and characters), which are displayed on the display unit 6. The category of "sound" includes voices , music and other acoustic elements, which are outputted from an unillustrated loudspeaker.

The program recording unit 4 records the received program on a medium. The category of "medium" herein includes, for example, a hard disk, a video tape, a DVD (Digital Versatile Disk) and so on.

The input device 7 receives a variety of events (operations) by the viewer such as searching for a related program, reserving the program and so forth. The input device 7 may be, for instance, a remote controller (that might be simply called a controller in some cases), TV channels, a keyboard, a mouse, a touch panel and so on.

The information detection unit 1 detects information related to an on-view program from contents of this on-view program (which information will hereinafter be referred to as relational information) . This piece of relational information is used for detecting a related program in the program information database 23. Namely, the information detection unit 1 obtains pieces of program information (e.g., ID for identifying the program, and a broadcasting date and time) of the program related to the on-display program content out of the program information retaining unit 2 on the basis of the relational information detected, and sends the thus obtained program information to the program reservation unit 3.

Further, the information detection unit 1 monitors a program content of an on-receipt broadcast program and prepares for detecting the relational information as the necessity may arise. Moreover, the information detection unit 1 extracts the relational information needed for detecting the related program from the program content in accordance with a viewer's input to the input device 7.

The program information retaining unit 2 has the program information database 23 retained in the storage unit. The program information database 23 can be structured in a variety of formats. For instance, what is multiplexed on broadcasting electromagnetic waves may be stored in the storage unit. Further, data of the database 23 may also be downloaded via, e.g., the Internet and stored on other mediums. Moreover, the data of the database 23 may be inputted through a removal disk such as a CD-ROM and so on.

The program information stored in this program information database 23 contains pieces of broadcasting information such as a title of the program, a broadcasting date/time and a broadcasting station, and pieces of content information such as the cast, production related staffers, organizations, a category and names of performance roles. The program information retaining unit 2 identifies a program related to a piece of the relational information in the program information database 23. The relatinal information generally contains character information.

The program reservation unit 3 reserves an action such as viewing/recording with respect to the program information transferred from the information detection unit 1. The program reservation unit 3 displays the program information of the reserved program on the display unit 6 in order for the viewer to confirm the program information. In this case, the viewer confirms a state of the reservation by use of the input device 7. The viewer may, however, set the program reservation unit 3 in a way that omits such an operation for the conformation.

FIGS . 2 and 3 show the screen images displayed on the display unit 6. FIGS. 2 and 3 each illustrate a configuration of the remote controller manipulated by the viewer.

As shown in FIG. 2, this controller includes button dials for selecting channels, a "decision" button and a "related program" button.

It is now assumed that two figures appeared are displayed and a voice such as [Pond, are you still alive ?] is outputted (uttered) on the display unit 6. The dialogue of [Pond, are you still alive ?] may, however, be displayed (superimposed). A start of a related program search function of the receiving system is triggered by a viewer's event of pressing the "related program" button on the controller.

FIG. 3 shows the screen image after executing the related program search function. On this screen, to begin with, a noun such as "Pond" is extracted from the voice data or character data of the superimposed dialogue of [Pond, are you stillalive?]. Then, a list of the related programs are searched with the nouns used as keys, such as the cast name "Pond" and a performer name "Jone Connery" acting as "Pond", and is then displayed on the display unit 6. Further, a present cursor position is framed with a bold line on the list of the related programs.

The viewer moves the cursor position on the list of the related programs by using up-and-down buttons (with marks "Δ ∇" disposed in the up-and-down directions) of the remote controller, and presses the "decision" button in a position of a desired program. The viewing or recording of the desired program is thus reserved.

### <System Architecture>

FIG. 4 shows a system architecture of the receiving system in the first embodiment. This receiving system includes, as in the principle diagram in FIG. 1, the broadcast receiving unit 5, the display unit 6, the program recording unit 4, the input device 7, the program reservation unit 3, the information detection unit 1, the program information retaining unit 2 and the program information database 23.

The broadcast receiving unit 5 is, for example, a tuner or a set-top box. As illustrated in FIG. 4, the broadcast receiving unit 5 has a demultiplexer and a tuning unit. The demultiplexer demultiplexes the received signals on the broadcast electromagnetic waves into image signals, sound signals, data broadcasting signals and superimposed dialogue/character signals according to the categories of the program contents. Further, the tuning unit of the broadcast receiving unit 5 serves to hold the broadcasting station selected at the present.

The demultiplexed signals of the program contents are transferred to the display unit 6 and the program recording unit 4. The sound data are transmitted also to the information detection unit 1. Herein, the display unit 6 is, e.g., a CRT (Cathode Ray Tube), a plasma flat display, a liquid crystal display and so on. Further, the recording unit 4 is a unit having a recording medium drive device for a recording medium such as the hard disk, DVD or video tape.

The information detection unit 1 includes a CPU and a memory. Further, the information detection unit 1 includes a voice recognizing module 12, a text data analyzing module 13, a character information retaining module 14 and a program detection control module 11, which are all defined as modules of an application program executed by the CPU.

The sound data transmitted to the information detection unit 1 from the broadcast receiving unit 5 are inputted to the voice recognizing module 12. The voice recognizing module 12 converts the voice data into text data and transfers the text data to the text data analyzing module 13. The text data analyzing module 13 converts the text data into character information that becomes a program search target in accordance with a specified syntax, and inputs the character information to the character information retaining module 14.

In an example shown in FIG. 4, only the noun information, after the text data have been converted into phrases, are extracted and inputted to the character information retaining module 14.

The character information retaining module 14 stores the memory with the character information by a fixed quantity or for a fixed period of time. This memory overwrites the character information sent from the text data analyzing module 13 on the oldest character information, and thus retains the character information of the content of the on-view program at all times. This type of memory is generally known as a ring buffer.

When the viewer performs operations of displaying and reserving the program related to the program content during the viewing of the program, the input device 7 notifies the program detection control module 11 of these operations. The program detection control module 11, when notified of these operations from the input device 7, indicates the character information retaining module 14 to input the character information retained by the module 14 itself to the program information retaining unit 2.

Then, the program detection control module 11 indicates the program information retaining unit 2 to search for the program information related to the sent character information from the program information database 23.

The program information retaining unit 2 also has a CPU and a memory. The program information retaining unit 2 and the information detection unit 1 may, however, share the CPU with each other. Further, the program information retaining unit 2 includes a program search module 21 defined as an application program executed by the CPU. Moreover, the program information retaining unit 2 manages the program information database 23 structured on the hard disk.

The program search module 21 searches for the program information containing character information related to the inputted the character information from the program information database 23, and sends a result of this search back to the program detection control module 11. Herein, the "character information" related to the inputted character information is character information containing the inputted character information, character information containing no such inputted character information, and synonyms of the character information.

The program detection control module 11 inputs the program information as the search result to the program reservation unit 3. The program reservation unit 3 transmits the received program information to the display unit 6. The display unit 6 displays the received program information to the viewer.

The viewer inputs an indication with respect to the displayed program information by use of the input device 7. The input device 7 detects and inputs the viewer's indication such as viewing/recording with respect to the program information to the program reservation unit 3.

The program reservation unit 3, however, displays on the display unit 6 an inquiry about whether to reserve or not for every item of program information, whereby the viewer may select whether the viewer makes the reservation or not.

The program reservation unit 3 stores a program reservation table with the program information specified through the input device 7. The program reservation unit 3, when there comes a broadcasting time of the program information stored in the program reservation table, notifies the broadcast receiving unit 5, the display unit 6 or the program recording unit 4 of this effect in order to make these units to execute viewing/recording of the program.

### <Structure of Database>

FIG. 5 shows an example of the data stored in the program information database 23. Each line in a table shown in FIG. 5 corresponds to a record of the data in the database . The record in the program information database 23 consists of a "service" field, an "ID" field, a "title of program" field, a "starting date/time" field and a "continuous time" field.

The "service" is defined as a number for identifying a program broadcasting channel. The "ID" is an identification number unique to the program. The "title of program" is a title of each program. The "starting date/time" is a date and time when the program starts.

Further, the "continuous time" is a period of time ranging from the start of the broadcast of the program to an end thereof. A broadcast ending date/time as. a substitute for the continuous time may also be stored in the program information database 23.

Note that the respective records in the program information database 23 are at first sorted out by the "service" and further sorted out by the "starting date/time" according to the first embodiment.

FIG. 6 shows an example of data in a program reservation table. As shown in FIG. 6, each line in the program reservation table consists of a "reservation ID" field, an "ID" field, a "title of program" field, a "starting date/time" field, a "continuous time" field and a "service" field.

The "reservation ID" is a serial number given according to the sequence of reservations and also an identification number unique to each record in the program reservation table. The data fields other the "reservation ID" field in the program reservation table are the same as those in the program information database 23. In the receiving system in the first embodiment, the data (records) are sorted out according to a starting date/time sequence in the program reservation table.

### <Operation and Effect>

FIG. 7 shows processes by the program detection control module 11. The information detection unit 1 detects a viewer's relation program displaying/reserving operation on the input device 7, which triggers a start of the processes by the program detection control module 11 (S1).

To start with, the program detection control module 11 obtains a noun information list from the character information retaining module 14 (S2). Note that the voice recognizing module 12 and the text data analyzing module 13 extract the nouns in real time out of the voices contained in the broadcast program, and these extracted nouns are stored in the character information retaining module 14. This type of voice recognizing technology is broadly known nowadays. Further, one of the known text data analyzing technologies is, e.g., a morpheme analysis.

Next, the program detection control module 11 judges whether the noun information exists in the noun information list (S3). If the noun information does not exist in the noun information list, the program detection control module 11 finishes the processing.

Whereas as if the noun information exists in the noun information list, the program detection control module 11 transfers all pieces of noun information to the program information retaining unit 2 and controls the same unit 2 to execute a program information search process (S4). The program information search process is a process of searching for a program related to the noun information transferred to the program information retaining unit 2. The information searched by this process will hereinafter be referred to as related-program information.

Next, the program detection control module 11 judges from a result of the program information search process whether there exists the related-program information (S5). If no single piece of related-program information exists, the program detection control module 11 finishes the processing.

While on the other hand, if the related-program information exists, the program detection control module 11 transfers the related-program information to the program reservation unit 3, and controls the same unit 3 to execute a program reservation process (S6). Thereafter, the program detection control module 11 finishes the processing. Note that the program reservation process is a process of reserving a program specified by the related-program information, and is executed by the program reservation unit 3.

FIG. 8 shows details of the program information search process (S4 in FIG. 7). This process is defined as one function of the program search module 21 of the application program, which is actualized by the CPU of the program information retaining unit 2.

In this program information search process, the program search module 21 accepts a list of character information for searching for the program (S40). This character information list, according to the first embodiment, is a list of the noun information contained in the content of the program that is being viewed at the present.

Next, the program search module 21 clears a storage area stored with the program information search result into a free area (S41).

Subsequently, the program search module 21 repeatedly executes the processes in steps S42 through S46 (a loop 1) a number of times that corresponds to the number of pieces of character information accepted in the process in S40. In this process, to start with, the program search module 21 sets, as a search character string, the pieces of character information contained in the character information list accepted in S40 sequentially from the head piece of character information (S42).

Next, the program search module 21 repeatedly executes the processes in steps S43 through S46 (a loop 2) a number of times that corresponds to the number of programs contained in the program information database 23. In this loop 2, the program search module 21 obtains the program information sequentially out of the program information database 23 (S43).

Then, the program search module 21 judges whether this piece of program information has already been obtained as a search result (S44). If the program information has already been obtained, the program search module 21 advances the control to a loop for obtaining the next program information.

Whereas if the program information concerned has not yet been obtained, the program search module 21 judges whether the same program information contains a program search character string (S45). If the same program information does not contain the program search character string, the program search module 21 advances the control to the loop for obtaining the next program information.

Whereas if the same program information contains the program search character string, the program search module 21 adds the program information concerned to the search result storage area (S46). Thereafter, the program search module 21 advances the control to the loop for obtaining the next program information.

The program search module 21, when thus terminating the loop 1 and the loop 2, finishes the processing by outputting the program information search result.

FIG. 9 shows details of the program reservation process (S6 in FIG. 7). This process is actualized as a part of the application program running on the CPU of the program reservation unit 3.

In this program reservation process, the program reservation unit 3 at first accepts the program information list (S60). This program information list is defined as a search result in the program information search process shown in FIG. 8.

Next, the program reservation unit 3 clears a storage area stored with display target program information (S61). Then, the program reservation unit 3 repeatedly executes processes in steps S62 through S64 (a loop 1) a number of times that corresponds to the number of programs contained in the program information list.

In this process, at first, the program reservation unit 3 obtains the program information sequentially out of the program information list (S62).

Next, the program reservation unit 3 judges whether the now-on-the-processing program information is program information on the program already reserved in the program reservation table (S63). If the program information is judged to be the information on the program already reserved in the program reservation table, the program reservation unit 3 advances the control to a next loop for obtaining the next program information.

Whereas if the program information is not the information on the program already reserved in the program reservation table, the program reservation unit 3 adds the same program information to a storage area for storing display target program information (S64). Thereafter, the program reservation unit 3 advances the control to a next loop for obtaining the next program information.

When finishing the processes of the loop 1 with respect to the programs of the program information list, the program reservation unit 3 displays on the display unit 6 a list of the program information stored in the storage area for the display target program information (which will hereinafter be simply called a display target program list) (S65).

Then, the program reservation unit 3 accepts a viewer's reserving operation (S66). Subsequently, the program reservation unit 3 repeatedly executes processes in steps S67 through S69 (a loop 2) a number of times that corresponds to the number of programs in the display target program information list.

In this process, the program reservation unit 3 obtains the program information sequentially from the display target program information list (S67). Then, the program reservation unit 3 judges whether the viewer gives an indication of reserving the program concerned (S68).

If the viewer does not give the indication of reserving the program, the program reservation unit 3 advances the control to the loop for obtaining the program information of the next program. Whereas if the viewer gives the indication of reserving the program, the program reservation unit 3 adds the program information to the program reservation table. Thereafter, the program reservation unit 3 advances the control to the loop for obtaining the program information of the next program.

When finishing the processes in steps S67 through S69 with respect to all the programs of the display target program information list, the program reservation unit 3 comes to an end of the program reservation process.

As discussed above, the broadcast receiving system in the first embodiment makes the voice-recognition of the voice data contained in the program, analyzes the text data, and extracts the character string, e.g., the noun contained in the voice data. Then, the broadcast receiving system searches for the program information on the program related to the character string described above, and displays the searched program information to the viewer. Accordingly, the viewer is able to, even if having no preparatory knowledge about the on-viewing program, to be more specific, even when knowing neither the names of the performers nor the figures appeared, operate the broadcast receiving system to display the list of the programs related to the content of the on-viewing program, and able to reserve receiving or recording such related-programs.

### <Modified Example of Reserving Program Related to Content of Caption>

In the broadcast receiving system in the first embodiment, the voice recognizing module 12 makes the voice-recognition of the voice data contained in the broadcast program and extracts the character string contained in the voice data. The embodiment of the present invention is, however, limited to neither this architecture nor this procedure. For example, the characters contained in the caption are recognized instead of the voice-recognition of the voice data, and program information related to a content of the thus recognized characters may be searched for.

FIG. 10 illustrates a system architecture of a receiving system for recognizing the characters contained in the caption. This receiving system has substantially the same system architecture shown in FIG. 4 except that the information detection unit 1 does not include the voice recognizing module 12.

As shown in FIG. 10, the broadcast receiving unit 5 includes, as in the first embodiment discussed above, the demultiplexer and the tuning unit. In the TV broadcasting, the caption is broadcast in superimposition on the program during the VBI (Vertical Blanking Interval) till a transition to scanning over a next screen after an end of scanning over one screen. Further, in the digital broadcasting that has been launched in the recent year, the caption is multiplexed as data separately from the picture. The broadcast receiving unit 5 demultiplexes the caption from the received signals into character string information, and inputs the same character string information to the information detection unit 1.

The information detection unit 1 includes the text data analyzing module 13, the character information retaining module 14 and the program detection control module 11. The information of the caption transmitted to the information detection unit 1 from the broadcast receiving unit 5, is inputted to the text data analyzing module 13.

Namely, according to the system architecture shown in FIG. 10, the broadcast data multiplexed separately or carried on the signals during the VBI directly become the information for searching for the related-program information. Accordingly, the system architecture illustrated in FIG. 10 has no necessity of providing the voice recognizing module 12 as shown in FIG. 4.

The processes after inputting the caption to the text data analyzing module 13 are the same as those in the broadcast receiving system shown in FIG. 4, and therefore their repetitive explanations are herein omitted.

As described above, the broadcast receiving system shown in FIG. 10 searches for the program information of the program related to the information of the caption that is separately multiplexed or broadcast during the VBI, and, as by the broadcast receiving system in the first embodiment, displays to the viewer the program information on the display unit 6, thereby providing the program receiving or recording function.

### <Modified Example of Utilizing Caption Contained in Video Data>

The broadcast receiving system in FIG. 10 demultiplexes the information of the caption that is broadcast during the VBI, and operates to reserve receiving or recording the program related to its content.

As a substitute for the information of the caption separately multiplexed or broadcast during the VBI, the information of the caption contained in the video data may be extracted as character string information. This kind of character recognizing technology is generally known as featured by, e.g., [Information Processing] Vo.22, No.04, 1981, issued by the Information Processing Society of Japan. Further, there is now seen a widespread of an OCR (Optical Character Reader) program technique of reading printed characters and handwritten characters from a scanner and, after a conversion into a bit pattern, recognizing the character.

Accordingly, the broadcast receiving unit 5 or the information search unit 1 may be provided with a character recognizing module for executing a process of recognizing the character from bitmap data. The broadcast receiving unit 5 may be structured to generate a bitmap from the picture (image) of the program received and to transfer the bitmap to the character recognizing module.

Note that the program image may be separated in colors before transferring the bitmap of the program image to the character recognizing module. Normally, the colors of the caption are different from the colors of the program image in many cases. Hence, the bit map for every color is generated, and these bitmaps are transferred to the character recognizing module, whereby the character recognizing module can efficiently recognize the character.

Further, before transferring the bitmap of the program image to the character recognizing module, a predetermined area of the bitmap may be clipped out (a clipping process). It is because the position where the caption is displayed is often limited to a specified position such as, normally, a lower position on the screen.

Accordingly, the character recognizing module receives the bitmap with its predetermined area clipped out and is therefore capable of efficiently recognizing the character. The system may be provided with a function of helping the user specify such a clip-out area and a function of making a micro-adjustment of the position of the area.

### <Modified Example of Reserving Program Related to Content of Data Broadcasting>

FIG. 11 shows an example of a broadcast receiving system for reserving program information related to a content of the data broadcasting. A system architecture of this broadcast receiving system is substantially the same as the architecture shown in FIG. 10. The broadcast receiving system shown in FIG. 11, however, has such a difference from the broadcast receiving system in FIG. 10 that the information detection unit 1 has a character information demultiplexing module 15 provided on the input side.

According to the satellite digital broadcasting or the like, the data broadcast is distributed in parallel with the program broadcast. The broadcast receiving unit 5 demultiplexes the data broadcast out of the signals received, and inputs the data broadcast to the character information demultiplexing module of the information detection unit 1.

The character information demultiplexing module 15 demultiplexes the character information out of the data broadcast carried on the signals received, and inputs the thus demultiplexed character string information to the text data analyzing module 13. The processes from the stage of the text data analyzing module 13 onwards are the same as those in the first embodiment (FIG. 4) or in the modified example (FIG. 10) of the first embodiment.

Hence, the broadcast receiving system shown in FIG. 11 searches for the program information of the program related to the data broadcast distributed in parallel with the program and, as by the broadcast receiving system in the first embodiment, displays the program information to the viewer on the display unit 6 , thereby providing the function of receiving or recording this program.

### <Other Modified Examples>

The system architecture of the broadcast receiving system (FIG. 4) in the first embodiment or each of the modified versions (FIGS. 10 and 11) thereof, is configured by the broadcast receiving unit 5, the display unit 6, the program recording unit 4, the program reservation unit 3, the information search unit 1, the program information retaining unit 2, the program information database 23 and the input device 7. Any two or more units among these units and device may be constructed into one united unit.

For example, the program reservation unit 3 may be incorporated into the broadcast receiving unit 5 or the program recording unit 4. Further, the information detection unit 1 may be incorporated together with the program reservation unit 3 into the broadcast receiving unit 5 or the program recording unit 4.

In this case, the broadcast receiving unit 5 and the program recording unit 4 may be constructed as an integral unit. Moreover, the program information retaining unit 2 may be incorporated together with the information detection unit 1 and the program reservation unit 3 into the broadcast receiving unit 5 or the program recording unit 4.

By contrast, the information search unit 1, the program information retaining unit 2 and the program information database 23 may be structured as components of the receiving system, alternatively may be provided in, e.g., a server on the Internet. Further, only the program information database 23 may be provided in the server on the Internet.

In such a case, the broadcast receiving system may be provided with a communication interface for accessing the Internet and so on. The communication interface is, for instance, a modem, a dial-up router and so forth. According to the first embodiment, the nouns are extracted from the voices of the program received and the caption in order to search for the program related to the program received. The embodiment of the present invention is not, however, confined to this mode. For example, verbs, adjectives, dates etc may also be used as a substitute for the noun.

### «Second Embodiment»

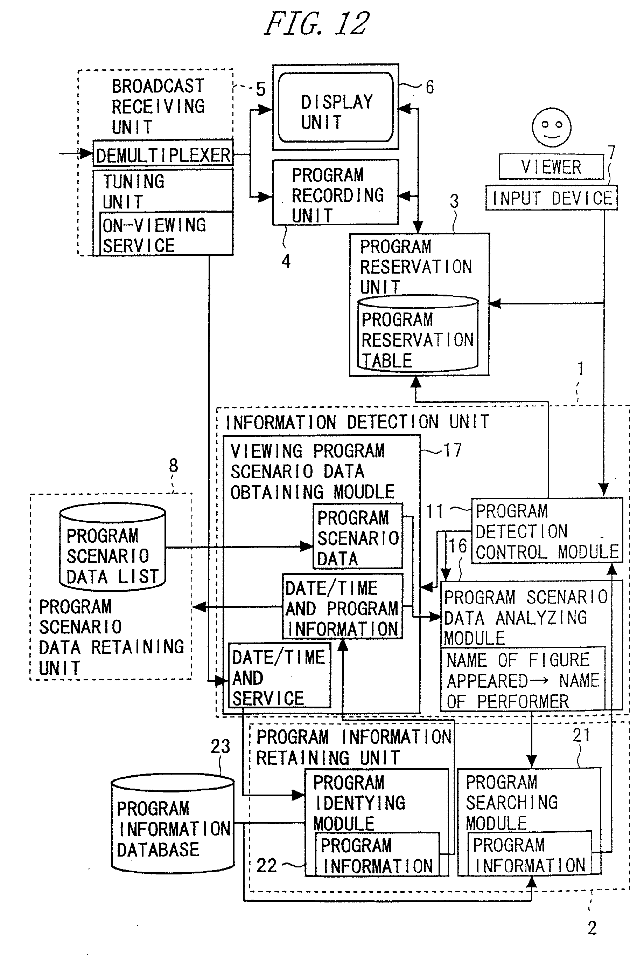

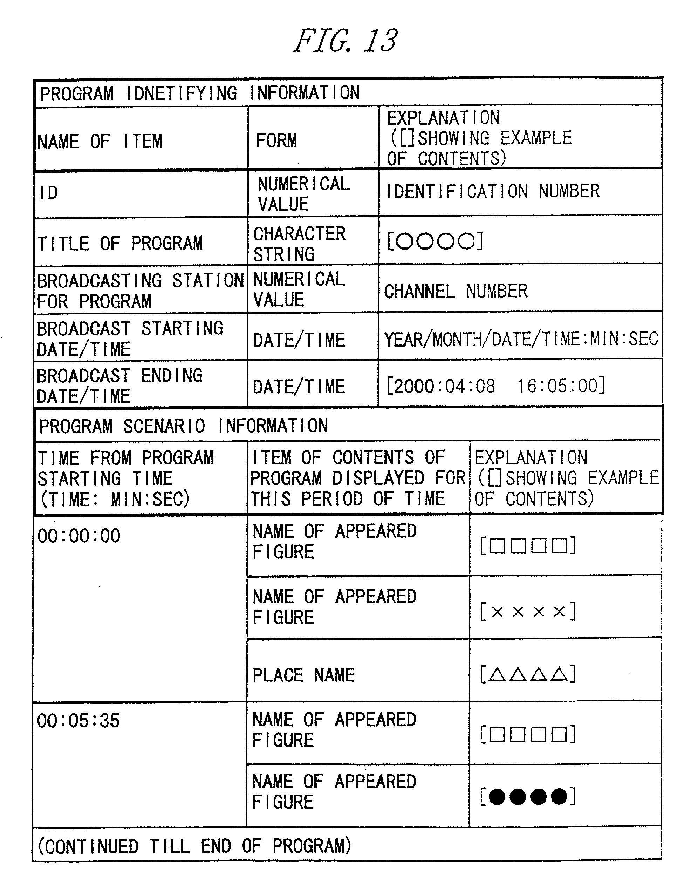

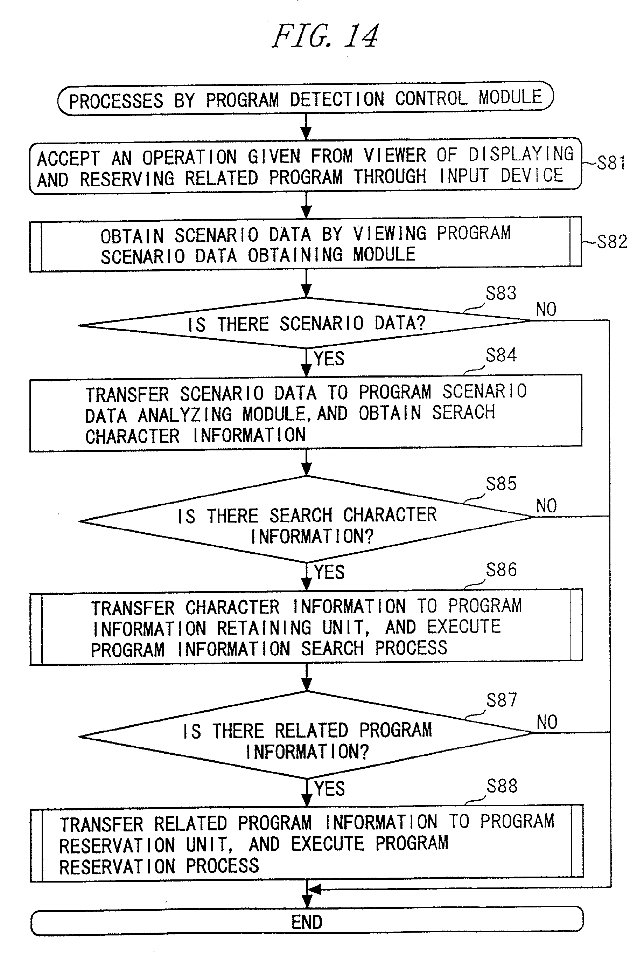

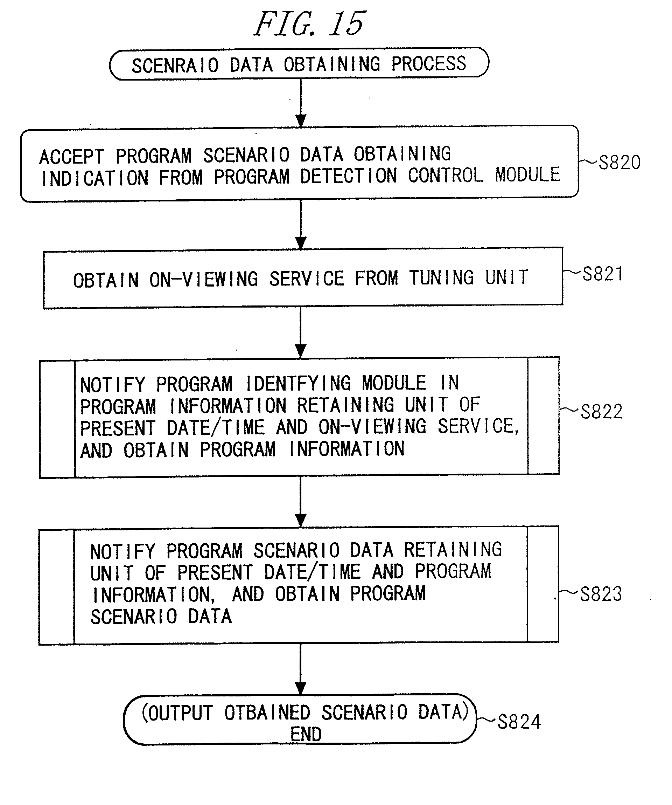

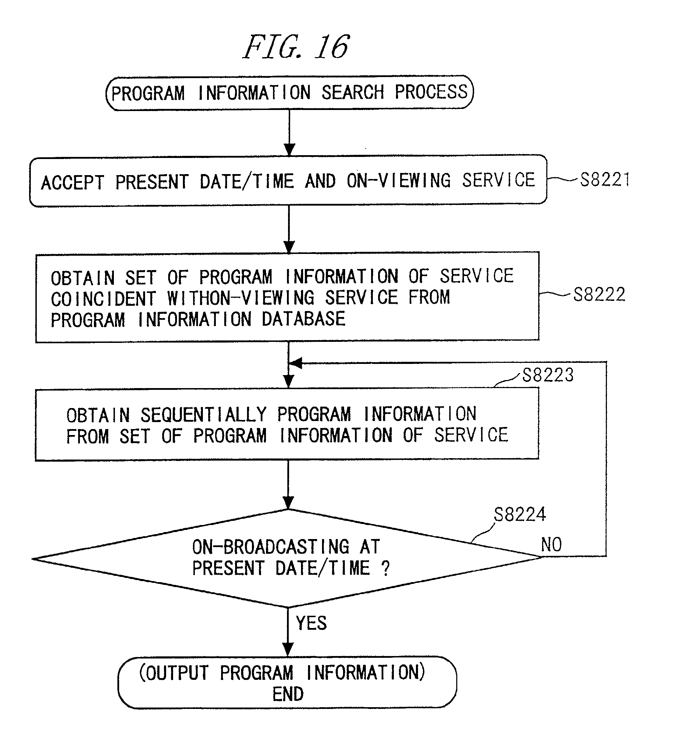

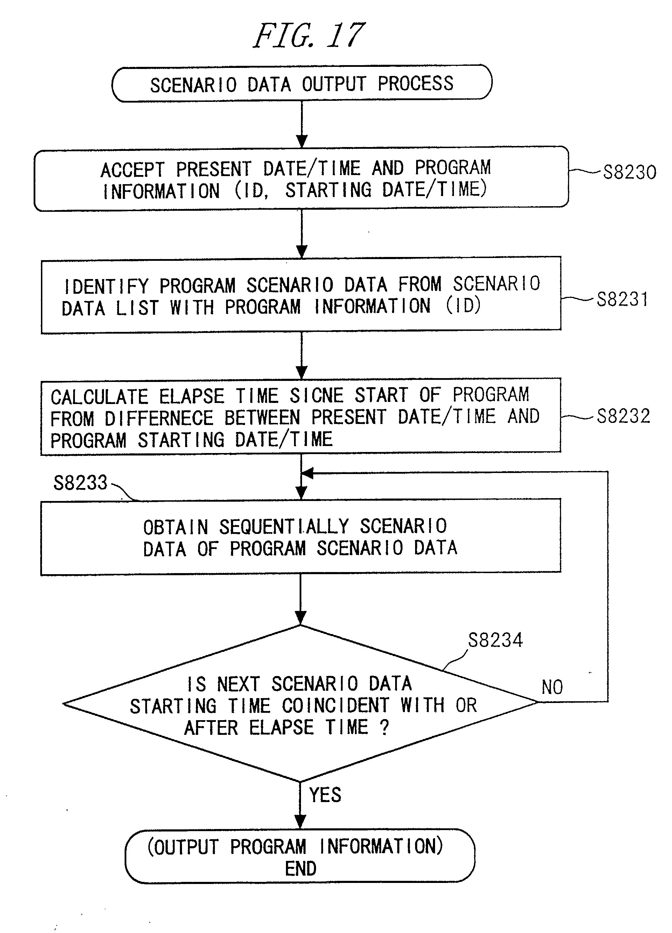

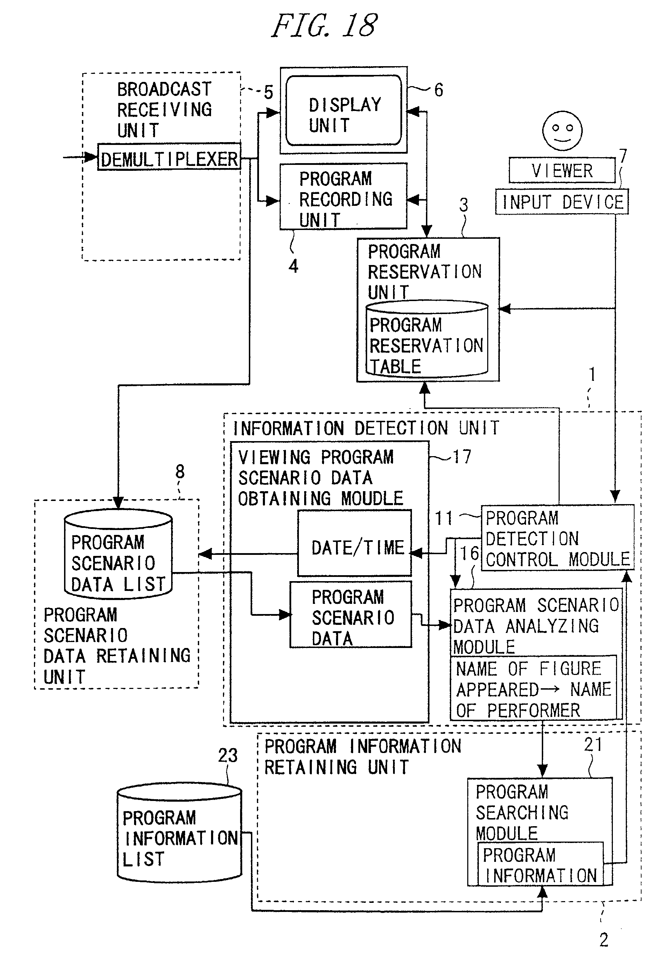

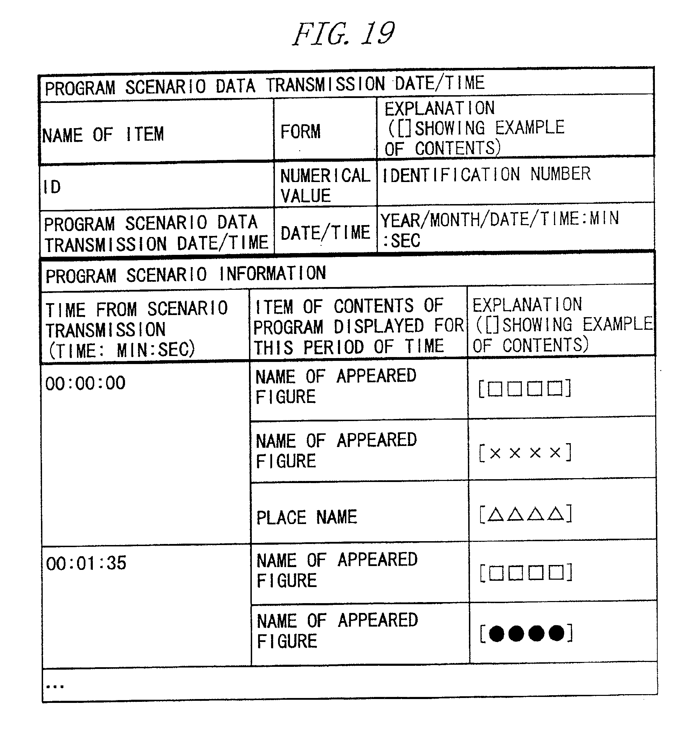

A second embodiment of the present invention will hereinafter be discussed with reference to FIGS. 12 through 19. Fig. 12 is a diagram showing a system architecture of the broadcast receiving system in the second embodiment. FIG. 13 shows an example of program scenario data retained in a program scenario data retaining unit 8. FIG. 14 is a flowchart showing processes by the program detection control module 11 shown in FIG. 12. FIG. 15 is a flowchart showing a scenario data obtaining process by a viewing program scenario data obtaining module 17 shown in FIG. 12. FIG. 16 is a flowchart showing a program information search process by a program identifying module 22 shown in FIG. 12. FIG. 17 is a flowchart showing a scenario data output process in the program scenario data retaining unit 8 shown in FIG. 12. FIG. 18 is a diagram showing a system architecture of the receiving system in a modified example of the second embodiment. FIG. 19 is a diagram showing a data structure of the program scenario data in the modified example of the second embodiment.

The discussion in the first embodiment has been focused on the broadcast receiving system for extracting the character string information from the contents of the voices contained in the broadcast program and the caption, and making the reservation of receiving or recording the program related to the on-viewing program.

The discussion in the second embodiment will focus on the broadcast receiving system for searching for the related program information on the basis of program scenario data that describe a scenario of the broadcast program, and making a reservation of viewing or recording this program. Therefore, this broadcast receiving system includes a unit for retaining the program scenario data.

Other components and operations of this broadcast receiving system are the same as those in the first embodiment. Therefore, the same components are marked with the same numerals as those in the first embodiment, and their repetitive explanations are omitted. Further, the drawings in FIGS. 1 through 11 will be referred to according to the necessity.

### <System Architecture>

FIG. 12 shows the system architecture of the broadcast receiving system in the second embodiment. This broadcast receiving system has the following different points from the broadcast receiving system in the first embodiment.

First, the present broadcast receiving system includes the program scenario data retaining unit 8. Further, this receiving system has, as in the first embodiment, the information detection unit 1 and the program information retaining unit 2. According to the second embodiment, however, the information detection unit 1 includes the viewing program scenario data obtaining module 17 and a program scenario data analyzing module 16 as substitutes for the voice recognizing module 12, the text data analyzing module 13 and the character information retaining module 14 in the first embodiment.

Moreover, the program information retaining unit 2 in the second embodiment has a program identifying module 22 in addition to the program search module 21. The components of the broadcast receiving system in the second embodiment other than these described above are the same as those in the first embodiment.

As explained above, the information detection unit 1 has the program detection control module 11, the viewing program scenario data obtaining module 17 and the program scenario data analyzing module 16. As in the first embodiment, the program detection control module 11, when given an indication (notification) from the input device 7, indicates the viewing program scenario data obtaining module 17 to obtain program scenario data of the program in real time that is being viewed at the present and to input the same data to the program scenario data analyzing module 16.

The viewing program scenario data obtaining module 17 functions as follows.
(1) The module 17 obtains from a built-in timer a date and time when given the notification from the program detection control module 11 (when given the indication from the viewer). Further, the module 17 obtains information about the on-receipt broadcasting station from the tuning unit.
(2) The module 17 notifies the program information retaining unit 2 of the date/time and the information about the broadcasting station which have been obtained in the process (1), and obtains the program information of the program that is being viewed at the present.
(3) The module 17 notifies the program scenario data retaining unit 8 of the on-viewing program information and the date/time obtained, and gets the program scenario data about the on-viewing program.

Note that the program scenario data retaining unit 8 retains the program scenario data stored via an external medium. The external medium is a recording medium such as a CD-ROM, a DVD etc., and a communication medium such as the Internet, a cable TV network, etc.

FIG. 13 shows the example of the program scenario data in the second embodiment, the program scenario data contains a set of "program identifying information" and a set of program scenario information".

As shown in FIG. 13, the "program identifying information" contains an ID, a title of the program, a broadcasting station for the program, a broadcast starting date/time of the program and a broadcast ending date/time of the program. The ID herein is, as in the first embodiment, an identification number unique to the program.

The "program scenario information" may be defined as character information that describes a content of the program on the time-base. The "program scenario information" contains time from a program starting time as the time-base, and contents (names of figures appeared, a place name and so on) of the program that is scheduled to be broadcast at this starting time elapsed.

The program scenario data retaining unit 8 compares the date/time information and the information about the broadcasting station of which the viewing program scenario data obtaining module 17 notified with the "program identifying information" in the program scenario data stored therein.

Then, the program scenario data retaining unit 8 takes out the program scenario data of the program that is now being broadcast. Further, the program scenario data retaining unit 8 compares the program broadcast starting date/time with the notified date/time, and counts a period of time from the start of the program. Then, the program scenario data retaining unit 8 transfers to the viewing program scenario data obtaining module 17 the items contained in the contents of the program at the time when the viewer's input (indication) has been given.

As explained above, the viewing program scenario data obtaining module 17 inputs to the program scenario data analyzing module 16 the date/time when the viewer's indication has been given, the program information of the program that was being viewed at that time and the program scenario of this program.

The program scenario data analyzing module 16 converts the program scenario data into the character information that can be used as a key for searching for the program in a way that make the use of the date/time and program information. For example, referring to FIG. 13, pieces of information on the names of the figures appeared, which are contained in the program scenario data, are converted into names of performers by making use of the program information.

The program scenario data analyzing module 16 sends the converted character information to the program information retaining unit 2, and obtains relational pieces of program information. Then, the program scenario data analyzing module 16 sends the relational program information to the program detection control module 11.

The program detection control module 11 inputs the thus searched program information to the program reservation unit 3. The program reservation unit 3, the display unit 6 and the program recording unit 4 function in the same way as those units of the broadcast receiving system in the first embodiment do.

### <Operation and Effect>

FIG. 14 shows processes of the program detection control module 11. The information detection unit 1 detects a viewer's operation of displaying/reserving the related program through the input device 7, which triggers a start of the processes of the program detection control module 11 in the second embodiment (S81).

To begin with, the program detection control module 11 controls the viewing program scenario data obtaining module 17 to obtain the scenario data (S82).

Next, the program detection control module 11 judges whether the scenario data are obtained (S83). If unable to obtain the scenario data, the program detection control module 11 finishes the processing.

While on the other hand, when judging in S83 that the scenario data can be obtained, the program detection control module 11 transfers the scenario data to the program scenario data analyzing module 16 in order to search for the information on the related program, and makes the same module 16 obtain the character information for the search (S84).

Next, the program detection control module 11 judges from a result of processing in S84 whether there is (obtained) the character information for the search (S85). If unable to obtain the character information for the search, the program detection control module 11 finishes the processing.

While on the other hand, when judging in S85 that the character information for the search can be obtained, the program detection control module 11 transfers the character information to the program search module 21 of the program information retaining unit 2, and controls the same module 21 to execute a program information search process (S86).

Next, the program detection control module 11 judges from a result of the program information search process in S86 whether there is the related program information (S87). If there is no related program information, the program detection control module 11 finishes the processing.

While on the other hand, when judging in S87 that there is the relatedprogram information, the program detection control module 11 transfers the program information to the program reservation unit 3, and makes the same unit 3 execute a program reservation process (S88). Thereafter, the program detection control module 11 finishes the processing.

FIG. 15 shows details of the scenario data obtaining process (S82 in FIG. 14) by the viewing program scenario data obtaining module 17.

In this scenario data obtaining process, the viewing program scenario data obtaining module 17 accepts a program scenario data obtaining indication from the program detection control module 11 (S820).

Then, the viewing program scenario data obtaining module 17 accesses the tuning unit of the broadcast receiving unit 5 and gets a service (a so-called broadcasting channel) of the program that is now being viewed (S821).

Next, the viewing program scenario data obtaining module 17 gives a notification of the present date/time and the service (channel) of the program that is now being viewed to the program identifying module 22 (see FIG. 12) of the program information retaining unit 2.

The program identifying module 22 obtains a piece of program information (e.g., an ID unique to the program) for specifying the program from the program information database 23. Then, the program identifying module 22 transfers this piece of program information to the viewing program scenario data obtaining module 17 (S822).

The viewing program scenario data obtaining module 17 notifies the scenario data retaining unit 8 of the present date/time and the program information. Subsequently, the viewing program scenario data obtaining module 17 obtains the program scenario data of this program from the scenario data retaining unit 8 (S823).

The viewing program scenario data obtaining module 17 outputs the obtained program scenario data to the program detection control module 11 (S824). Thereafter, the viewing program scenario data obtaining module 17 finishes the processing.

FIG. 16 shows details of the program information search process (S822 in FIG. 15) executed by the program identifying module 22. In this process, at first, the program identifying module 22 accepts the present date/time and the service (channel) of the program that is now being viewed from the viewing program scenario data obtaining module 17 (S8221).

Next, the program identifying module 22 obtains a set of program information of the service coincident with the service (channel) of the on-viewing program from the program information database 23 (S8222).

Subsequently, the program identifying module 22 extracts pieces of program information sequentially from the set of program information (S8223). Then, the program identifying module 22 judges whether this extracted piece of program information is coincident with the program information of the program that is being broadcast at the present date/time (S8224).

If this extracted piece of program information is not coincident with the program information of the program that is beingbroadcast at the present date/time, the program identifying module 22 returns the control to S8223, and obtains a next piece of program information. Whereas if judging in S8224 that the extracted piece of program information is coincident with the program information of the program that is being broadcast at the present date/time, the program identifying module 22 outputs the coincident program information to the viewing program scenario data obtaining module 17, and finishes the processing.

FIG. 17 shows details of the scenario data output process (S823 in FIG. 15) executed by the program scenario data retaining unit 8. In this process, the program scenario data retaining unit 8, to start with, accepts the present date/time and the program information from the viewing program scenario data obtaining module 17 (S8230). This accepted piece of program information contains the program ID and the program starting date/time.

Next, the program scenario data retaining unit 8 identifies program scenario data from a scenario data list by use this program ID (S8231).

Subsequently, the program scenario data retaining unit 8 calculates an elapse time from the start of the program on the basis of a difference between the present date/time and the starting date/time (S8232).

Next, the program scenario data retaining unit 8 sequentially obtains pieces of program scenario data specified in S8231 (S8233). Then, the program scenario data retaining unit 8 next judges whether the starting time of the scenario data is coincident with or after the elapse time calculated in S8232 (S8234).

If the starting time of the scenario data is not coincident with nor after the elapse time, the program scenario data retaining unit 8 returns the control to S8233, and obtains a next piece of scenario data. Whereas if judging in S8234 that the starting time of the scenario data is coincident with or after the elapse time, the program scenario data retaining unit 8 outputs the obtained scenario data to the viewing program scenario data obtaining module 17.

As discussed above, the broadcast receiving system in the second embodiment searches for the character information from the scenario data of the on-viewing program, and reserves the program related to this piece of character information. Accordingly, if the viewer has no preparatory knowledge about the scenario of the program, the viewer is able to search for the program related to the content of the program, especially to the scenario.

### <Example of Receiving Program Scenario Data Carried on Broadcast Electromagnetic Waves>

According to the second embodiment, the program scenario data retaining unit 8 stores the program scenario data through the external medium. The embodiment of the present invention is not, however, limited to the architecture and mode described above.

FIG. 18 shows an example of a broadcast receiving system for receiving the program scenario data carried on the broadcast electromagnetic waves . The architecture of this broadcast receiving system is the same as that in the second embodiment (FIG. 12). This broadcast receiving system, however, has such a different point from the second embodiment that the program scenario data stored in the program scenario data retaining unit 8 are supplied from the broadcast receiving unit 5.

According to the second embodiment, in addition to the normal program contents such as the pictures, the voices, the data broadcast and the caption, the program scenario data related to the program that is now being broadcast are multiplexed with the electromagnetic waves . The multiplexing may be conducted by utilizing the VBI (Vertical Blanking Interval).

Further, the satellite digital broadcasting and an MPEG-2 (Moving Picture Experts Group-2) based program providing system are capable of containing a plurality of broadcast programs in the broadcast data known as a transport stream. Hence, the program scenario data may be multiplexed in such a transport stream.

As in the second embodiment (FIG. 12), the broadcast receiving unit 5 in FIG.18 has the demultiplexer. The demultiplexer of the broadcast receiving unit 5 demultiplexes the program scenario data related to the program that is now being broadcast from the program contents such as the pictures, the voices, the data broadcast and the caption.

The broadcast receiving unit 5 transfers the thus demultiplexed program scenario data to the program scenario data retaining unit 8. With this data transfer, the program scenario data retaining unit 8 updates the scenario data at a timing of the distribution from the broadcasting station at any time.

Other configurations are the same as those shown in FIG. 12, and therefore their repetitive explanations are omitted.

### <Modified Example of Program Scenario Data>

In the second embodiment, the scenario information of the program scenario data are described according to the elapse time from the start of the program and the program contents displayed in this elapse time (FIG. 13). The embodiment of the present invention is not, however, confined to this structure of the scenario information.

FIG. 19 shows a modified example of the program scenario data. The program scenario data consists of two sets of information, i.e., "program scenario data transmission date/time" and "program scenario information". Further, the "program scenario information" is defined as character information describing program contents on the time-base.

With respect to the "program scenario information" shown in FIG. 19, however, the time-base is defined by a time elapsing since the program scenario data transmission date/time. Accordingly, the scenario information in this case indications the contents (names of the figures appeared, a place name and so on) of the program that is scheduled to be broadcast after each specified time has elapsed since the program scenario data were received. This category of scenario information can describe, for instance, "an actor (or actress) X will appear after T seconds from now". The program scenario can be flexibly modified by taking such a description mode.

### «Readable-by-Computer Recording Medium»

The program for a computer to actualize any one of the functions of the broadcast receiving system in the embodiments discussed above, may be recorded on a readable-by-computer recording medium. Then, the computer reads and executes the program on this recording medium, thereby actualizing any one of the functions shown in the embodiments discussed above.

Herein, the readable-by-computer recording medium embraces recording mediums capable of storing information such as data, programs, etc. electrically, magnetically, optically and mechanically or by chemical action, which can be all read by the computer. What is demountable out of the computer among those recording mediums may be, e.g., a floppy disk, a magneto-optic disk, a CD-ROM, a CD-R/W, a DVD, a DAT, an 8mm tape, a memory card, etc..

Further, a hard disk, a ROM (Read Only Memory) and so on are classified as fixed type recording mediums within the computer.

### «Data Communication Signal Embodied in Carrier Wave»

Furthermore, the above program may be stored in the hard disk and the memory of the computer, and downloaded to other computers via communication media. In this case, the program is transmitted as data communication signals embodied in carrier waves via the communication media. Then, the computer downloaded with this program can be made to provide any one of the functions.

Herein, the communication media may be any one of cable communication mediums such as metallic cables including a coaxial cable and a twisted pair cable, optical communication cables, or wireless communication media such as satellite communications, ground wave wireless communications, etc.

Further, the carrier waves are electromagnetic waves for modulating the data communication signals, or the light. The carrier waves may, however, be DC signals. In this case, the data communication signal takes a base band waveform with no carrier wave. Accordingly, the data communication signal embodied in the carrier wave may be any one of a modulated broadband signal and an unmodulated base band signal (corresponding to a case of setting a DC signal having a voltage of 0 as a carrier wave).

## Claims

1. A reservation control unit comprising:
a search request module requesting a program information retaining unit retaining program information containing a program broadcast date/time and a content information, to search for the program information;
a reservation request module requesting a program reservation unit making a reservation of viewing or recording the program, to reserve viewing or recording the program; and
an information obtaining module obtaining information related to the program from contents of the program received by a program receiving unit,
wherein said search request module makes said program information retaining unit search for the program information of the program related to the received program on the basis of the information obtained by said information obtaining module, and
said reservation request module makes a request for reserving a receipt of the program or reserving a record of the program on the basis of the searched program information.

2. A reservation control unit according to claim 1, wherein said information obtaining module includes a voice recognizing module converting voices contained in the received program into character information, and obtains the character information from the voices.

3. A reservation control unit according to claim 1, wherein said information obtaining module obtains the character information from a caption contained in the received program.

4. A reservation control unit according to claim 1, wherein said information obtaining module obtains the character information in a data broadcast multiplexed with a program broadcast.

5. A reservation control unit according to claim 1, wherein said information obtaining module accesses a scenario data retaining unit retaining scenario data of the program, and obtains information from the scenario data.

6. A reservation control unit according to claim 1, wherein said information obtaining module obtains the information from the scenario data transmitted in multiplexing with the program broadcast.

7. A reservation control unit according to claim 6, wherein the scenario data contain an elapse time since a start of the program and character information describing the program contents at this elapse time.

8. A reservation control unit according to claim 6, wherein the scenario data contain an elapse time since the scenario data transmission date/time and character information describing the program contents at this elapse time.

9. A program reserving method comprising:
obtaining information related to a program from contents of a program received by a program receiving unit,
searching for a broadcast date/time of the program related to the received program on the basis of the program-related information related to the program; and
making a request for reserving a receipt of the program or a record of the program on the basis of the broadcast date/time.

10. A program reserving method according to claim 9, further comprising converting voices contained in the received program into character information, wherein the information related to the program is obtained from the voices.

11. A program reserving method according to claim 9, wherein the information related to the program is obtained from a caption contained in the received program.

12. A program reserving method according to claim 9, wherein the information related to the program is obtained from a data broadcast multiplexed with a program broadcast.

13. A program reserving method according to claim 9, wherein the information related to the program is obtained from scenario data of the program.

14. A program reserving method according to claim 13, wherein the scenario data are transmitted in multiplexing with the program broadcast.

15. A program reserving method according to claim 13, wherein the scenario data contain an elapse time since a start of the program and character information describing the program contents at this elapse time.

16. A program reserving method according to claim 13, wherein the scenario data contain an elapse time since the scenario data transmission date/time and character information describing the program contents at this elapse time.

17. A storage medium readable by a machine, tangible embodying a program of instructions executable by the machine, comprising:
obtaining information related to a program from contents of a program received by a program receiving unit,
searching for a broadcast date/time of the program related to the received program on the basis of the information related to the program; and
making a request for reserving a receipt of the program or a record of the program on the basis of the broadcast date/time.

18. A storage medium readable by a machine, tangible embodying a program according to claim 17, further comprising a step converting voices contained in the received program into character information, wherein the information related to the program is obtained from the voices.

19. A storage medium readable by a machine, tangible embodying a program according to claim 17, wherein the program-related information related to the program is obtained from a caption contained in the received program.

20. A storage medium readable by a machine, tangible embodying a program according to claim 17, wherein the program-related information related to the program is obtained from a data broadcast multiplexed with a program broadcast.

21. A storage medium readable by a machine, tangible embodying a program according to claim 17, wherein the program-related information related to the program is obtained from scenario data of the program.

22. A storage medium readable by a machine, tangible embodying a program according to claim 21, wherein the scenario data are transmitted in multiplexing with the program broadcast.

23. A storage medium readable by a machine, tangible embodying a program according to claim 17, wherein the scenario data contain an elapse time since a start of the program and character information describing the program contents at this elapse time.

24. A storage medium readable by a machine, tangible embodying a program according to claim 17, wherein the scenario data contain an elapse time since a scenario data transmission date/time and character information describing the program contents at this elapse time.

25. A computer program comprising computer implementable instructions which, when executed on a computer, cause it to carry out the steps of any of claims 9 to 16.
